Europäisches Patentamt

European Patent Office

Office européen des brevets

(11) Publication number: **0 311 915 B1**

(12) **EUROPEAN PATENT SPECIFICATION**

(45) Date of publication of patent specification: **17.06.92** (51) Int. Cl.5: **A43B 13/42**, A43B 7/32

(21) Application number: **88116611.0**

(22) Date of filing: **07.10.88**

(54) **Footwear reinforcement.**

(30) Priority: **13.10.87 GB 8723962**

(43) Date of publication of application:
**19.04.89 Bulletin 89/16**

(45) Publication of the grant of the patent:
**17.06.92 Bulletin 92/25**

(84) Designated Contracting States:
**AT BE CH DE FR IT LI NL**

(56) References cited:
EP-A- 0 013 197    DE-A- 2 643 237
DE-A- 2 823 099    DE-A- 2 827 059
GB-A- 2 061 172    US-A- 3 442 032
US-A- 4 255 825

(73) Proprietor: **DUNLOP LIMITED**
**Silvertown House Vincent Square**
**London SW1P 2PL(GB)**

(72) Inventor: **Harrington, Robert**
**26 Baucher Drive Orrell**
**Bootle Merseyside L20 6JF(GB)**

(74) Representative: **Sparrow, Alvar Alfred et al**
**BTR Group Patent & Trade Mark Service P.O.**
**Box 504**
**Erdington Birmingham B24 9OH(GB)**

Rank Xerox (UK) Business Services

## Description

This invention relates to articles of footwear having an internal arch reinforcement and to a method for their manufacture.

Although the present invention will be described herein with particular reference to a reinforced moulded boot, it is not to be construed as being limited thereto.

The incorporation of stiffening or reinforcement elements in footwear to strengthen portions of the footwear structure is known. For instance: U.S. Patent Specification 3 442 032 discloses shoes having a stiffener of undirectional fibres embedded in thermoplastic resin, for example a shank stiffener in the insole or between the insole and the outsole; G.B. Patent Application Publication 2 061 172A discloses high-heeled synthetic resin footwear having an arcuate arch-and-heel stiffener of ferrous metal embedded in injection-moulded sole and heel portions; and U.S. Patent Specification 4 255 825 discloses injectionmoulded plastic footwear, especially high-heeled shoes, having a rigid arch-and-heel reinforcement of plastic or metal. Such footwear constructions generally are for normal wear and do not have the strength desired for work- or safety-boots.

Work- and safety-boots having a metal midsole in an injection-moulded sole are known, for instance from DE Offenlegungsschrift 2 823 099. However, it is found that such boots lack desirable resistance when used for digging operations which exert a high localised force on the arch region.

When boots are worn for use in digging operations, the spade or other implement tends to cut or abrade the arch region of the outsole of the boot. Outsoles of rubber are cut-resistant to some extent, but outsoles of pvc (the preferred material for bulk manufacture of boots) are relatively quickly damaged by repeated digging operations.

It is known to provide such boots with an external, "tie-on", metal plate to reinforce the arch region of the outsole. Such plates, known as "digging plates", are expensive and cumbersome and tend to be inefficient.

It is also known, in the case of boots with hand-made rubber outsoles, to incorporate an arch reinforcement member on the outside of the boot. However, in the case of pvc boots, such an external reinforcement, being of a harder material than that of the outsole, would tend to "break away" on flexing of the sole when the boot is in use.

We have found that reinforcement of the arch region of the outsole can be achieved, according to the present invention, by providing an internal "digging-plate" of a rigid plastics material.

Accordingly, the present invention provides an article of footwear comprising an upper, a flexible metal midsole and an outsole, in which an arch reinforcement member in the form of a plate of rigid plastics material is located between the metal midsole and the outsole.

The present invention further provides a method for the manufacture of an article of footwear of the type described in the immediately-preceding paragraph, the method comprising the following stages:

(i) placing the metal midsole in an injection mould and closing the mould by means of a sole closure plate;

(ii) injecting material into the mould to form the upper and to secure the midsole to the upper; and

(iii) replacing the sole closure plate with an outsole moulding plate and injecting material into the mould to form the outsole;

the method being characterised in that the arch reinforcement member is attached to the metal midsole before stage (i).

The arch reinforcement member preferably is a plate of a fibre-reinforced plastics material. Examples of such materials include fibre-reinforced polycarbonates and polypropylenes. The particularly preferred reinforcing fibres are glass fibres.

In the moulding process according to the present invention, the sole closure plate may be shaped so as to accommodate the arch reinforcement member.

By attachment of the arch reinforcement member to the midsole prior to placing the midsole assembly in the mould, movement of the arch reinforcement member during the moulding process is avoided. Such attachment may be achieved by means of a suitable adhesive.

In the finished boot, the arch reinforcement member can constitute part of the thickness of the outsole.

Alternatively, the outsole can be modified so as to have its normal thickness in addition to the thickness of the arch reinforcement, for example, to comply with British Standard Specifications 1870 part 3 and 6159 part 1 (which relate to safety footwear).

The preferred material for the arch reinforcement member (a glass fibre-reinforced polycarbonate) meets the nail penetration test requirements specified in British Standard Specification 1870 Part 3.

If required, footwear according to the present invention can include a toe reinforcement, known per se.

## Claims

1. An article of footwear comprising an upper, a flexible metal midsole and an outsole, characterised in that an arch reinforcement member in the form of a plate of rigid plastics material is located between the metal midsole and the outsole.

2. An article according to Claim 1 characterised in that the arch reinforcement member is a rigid plate made of a plastics material reinforced with fibres (e.g. glass fibres).

3. An article according to Claim 1 or 2, characterised in that the plastics material is polycarbonate or polypropylene.

4. An article according to Claim 1, 2 or 3, characterised in that the article is a reinforced moulded boot.

5. An article according to any of the preceding Claims, characterised in that the reinforcement member provides an internal digging plate for reinforcement of the arch region when used in a digging operation.

6. Method of making an article of footwear as defined in any of the preceding Claims, which comprises the stages of: (i) placing the metal midsole in an injection mould and closing the mould by means of a sole closure plate; (ii) injecting material into the mould to form the upper and to secure the midsole to the upper; and (iii) replacing the sole closure plate with an outsole moulding plate and injecting material into the mould to form the outsole, characterised in that the arch reinforcement member is attached to the metal midsole before stage (i).

7. A method according to Claim 6, characterised in that the sole closure plate is shaped so as to accommodate the arch reinforcement member.

8. A method according to Claim 6 or 7, characterised in that the arch reinforcement member is attached to the midsole by means of an adhesive.

**Revendications**

1. Article chaussant comportant une tige, une semelle intermédiaire en métal flexible et une semelle d'usure, caractérisé en ce qu'un élément de renforcement de cambrure sous la forme d'une plaque en matière plastique rigide est placé entre la semelle intermédiaire en métal et la semelle d'usure.

2. Article selon la revendication 1, caractérisé en ce que l'élément de renforcement de cambrure est une plaque rigide faite d'une matière plastique renforceé par des fibres (par exemple, des fibres de verre).

3. Article selon la revendication 1 ou 2, caractérisé en ce que la matière plastique est un polycarbonate ou un polypropylène.

4. Article selon la revendication 1, 2 ou 3 caractérisé en ce que l'article est une botte moulée renforcée.

5. Article selon l'une quelconque des revendications précédentes, caractérisé en ce que l'élément de renforcement définit une plaque de bêchage intérieure destinée à renforcer la zone de cambrure, lorsque celle-ci est utilisée lors d'une opération de bêchage.

6. Procédé pour fabriquer un article chaussant selon l'une quelconque des revendications précédentes, comportant les étapes qui consistent à: (i) placer la semelle intermédiaire en métal dans un moule à injection et fermer le moule à l'aide d'une plaque de fermeture de semelle; (ii) injecter matière dans le moule pour former la tige et pour assujettir la semelle intermédiaire à la tige; et (iii) remplacer la plaque de fermeture de semelle par une plaque de moulage de semelle d'usure et injecter une matière dans le moule pour former la semelle d'usure, caractérisé en ce que l'élément de renforcement de cambrure est fixé à la semelle intermédiaire en métal avant l'étape (i).

7. Procédé selon la revendication 6, caractérisé en ce que la plaque de fermeture de semelle est conformée pour recevoir l'élément de renforcement de cambrure.

8. Procédé selon la revendication 6 ou 7, caractérisé en ce que l'élément de renforcement de cambrure est fixé à la semelle intermédiaire à l'aide d'un adhésif.

**Patentansprüche**

1. Ein Schuhwerkartikel umfassend einen Schaft, eine flexible Mittelsohle aus Metall und eine Außensohle,
**dadurch gekennzeichnet,**
daß ein Fußgewölbeverstärkungselement in Form einer Platte aus starrem Kunststoffmaterial zwischen der Mittelsohle aus Metall und der Außensohle angebracht ist.

2. Artikel nach Anspruch 1,
dadurch gekennzeichnet,
daß das Fußgewölbeverstärkungselement eine starre Platte ist, die aus einem Kunststoffmaterial hergestellt ist, das durch Fasern (z.B. Glasfasern) verstärkt ist.

3. Artikel nach Anspruch 1 oder 2,
dadurch gekennzeichnet,
daß das Kunststoffmaterial Polycarbonat oder Polypropylen ist.

4. Artikel nach Anspruch 1, 2 oder 3,
dadurch gekennzeichnet,
daß der Artikel ein verstärkter gegossener Stiefel ist.

5. Artikel nach einem der vorhergehenden Ansprüche,
dadurch gekennzeichnet,
daß das Verstärkungselement eine innere Platte zum Graben zur Verstärkung des Fußgewölbebereichs aufweist, wenn es bei einem Vorgang des Grabens verwendet wird.

6. Verfahren zum Herstellen eines Schuhwerkartikels gemäß einem der vorhergehenden Ansprüche, das die folgenden Schritte aufweist:
(i) Anordnen der Mittelsohle aus Metall in einer Spritzgußform und Schließen der Form durch eine Sohlenabschlußplatte;
(ii) Einspritzen von Material in die Form, um den Schaft zu bilden und die Mittelsohle am Schaft zu befestigen; und
(iii) Ersetzen der Sohlenabschlußplatte durch eine die Außensohle formende Platte und Einspritzen von Material in die Form, um die Außensohle zu bilden,
dadurch gekennzeichnet,
daß das Fußgewölbeverstärkungselement vor Schritt (i) an der Mittelsohle aus Metall befestigt wird.

7. Verfahren nach Anspruch 6,
dadurch gekennzeichnet,
daß die Sohlenabschlußplatte so geformt ist, daß sie das Fußgewölbeverstärkungselement aufnimmt.

8. Verfahren nach Anspruch 6 oder 7,
dadurch gekennzeichnet, daß
das Fußgewölbeverstärkungselement mit einem Klebemittel an der Mittelsohle befestigt wird.